# EUROPÄISCHE PATENTSCHRIFT

(11) **EP 0 756 128 B1**
(45) Veröffentlichungstag und Bekanntmachung des Hinweises auf die Patenterteilung: **21.02.2001**
(21) Anmeldenummer: 96810409.1
(22) Anmeldetag: 19.06.1996
(51) Int. Cl.: F16L 47/00

(54) **Anbohrarmatur**
Tapping apparatus
Appareil de perçage

(30) Priorität: 26.07.1995 CH 219095
(43) Veröffentlichungstag der Anmeldung: 29.01.1997
(73) Patentinhaber: Georg Fischer Wavin AG, 4553 Subingen (CH)
(72) Erfinder: Amacher, Urs, 4558 Winistorf (CH)
(74) Vertreter: Weiss, Wolfgang, Dr.

(56) Entgegenhaltungen:
- WO-A-95/16874
- DE-A- 2 051 702
- US-A- 3 995 655

## Beschreibung

Die vorliegende Erfindung betrifft eine Anbohrarmatur gemäss Oberbegriff des Patentanspruches 1.

Anbohrarmaturen dienen zur Herstellung einer Verbindung zwischen einer ein Medium führenden Hauptleitung und einer Abgangsleitung. Das Medium kann flüssig oder gasförmig sein. Da das Medium auch während dem Bohrvorgang in der Hauptleitung unter Druck steht, muss die Anbohrarmatur zu jedem Zeitpunkt eine ausreichende Abdichtung gewährleisten.

Die bekannten Anbohrarmaturen oder Anbohrschellen weisen im allgemeinen eine oder zwei Halbschalen auf, die um die Hauptleitung gelegt werden. Die Herstellung der dichten Verbindung zwischen der Anbohrarmatur und der Hauptleitung erfolgt bevorzugterweise mittels Elektroschweissen; es sind jedoch auch andere Verfahren bekannt. Ferner umfasst die Anbohrarmatur einen in einem Bohrerführungsstutzen drehbar axial verschiebbaren Bohrer, mittels dessen die Rohrwand der Hauptleitung durchbohrt wird.

Damit das Medium nicht in die Umwelt gelangen kann, muss der Bohrer gegenüber den übrigen Teilen der Anbohrarmatur in jeder Lage abgedichtet sein. Für diese Dichtung werden bis jetzt stets Dichtringe verwendet.

So ist in EP-A-0'572'817 ein Bohrerschaft in einem Ringkörper, der Teil eines Bohrerführungsstutzens ist, axial verschiebbar gehalten. Der Ringkörper enthält Ringnuten, in denen Dichtringe angeordnet sind, die dichtend an der zylindrischen Aussenfläche des Bohrerschaftes anliegen. Zur zusätzlichen Abdichtung ist im oberen Bereich des Ventilstutzens ein Abstreifring vorhanden.

Aus US-A-3'995'655 ist ein Bohrerschaft bekannt, der zwei Aussengewinde mit unterschiedlichen Aussendurchmessern aufweist. Das bohrernahe Gewinde weist dabei einen stetig zunehmenden Durchmesser auf. Dieser dient dem erleichterten Abtransport der Bohrspäne und nicht der axialen Verschiebung innerhalb des Bohrerführungsstutzens. Die Dichtung erfolgt wiederum mittels O-Ringen.

Aus der Schweizer Patentanmeldung Nr. CH 3728/93 ist eine weitere Anbohrarmatur mit integriertem Bohrer bekannt, der eine bessere Dichtung während dem Anbohrvorgang gewährleistet und zudem eine kürzere Bauweise der Anbohrarmatur ermöglicht. Die Anbohrarmatur umfasst einen Bohrerführungsstutzen, in dem eine Zustellhülse schraubbar axial verschiebbar ist. Der Bohrer selber ist in dieser Zustellhülse schraubbar gelagert. Auch hier erfolgt sowohl die Dichtung zwischen Zustellhülse und Bohrerführungsstutzen wie auch zwischen Zustellhülse und Bohrerschaft mittels Dichtringen.

Diese bekannten Anbohrarmaturen weisen einige Nachteile auf. Das Anbringen der Dichtungsringe erfordert einen zusätzlichen Produktionsschritt im Herstellungsverfahren. Ferner unterliegen sie einem Alterungsprozess, wodurch ihr Dichtungsvermögen beeinträchtigt wird. Ferner müssen sie auf einer glatten Fläche anliegen, um eine optimale Dichtung zu gewahrleisten. Dadurch müssen die betreffenden glatten Flächen stets sauber sein. Andererseits sind der Bohrer und somit auch der Bohrerführungsstutzen wegen des Platzbedarfes der Dichtungsringe beziehungsweise der glatten Fläche relativ lang. Es ist jedoch eine Anforderung an die Anbohrarmatur, dass sie eine möglichst kurze Bauhöhe aufweist, um einen Einbau auch bei geringer Bodendeckung über der Leitung zu ermöglichen.

Es ist deshalb Aufgabe der Erfindung, eine Anbohrarmatur zu schaffen, die auch ohne Dichtungsringe eine genügende Dichtheit gewährleistet.

Diese Aufgabe löst eine Anbohrarmatur mit den Merkmalen des Patentanspruches 1 oder 2.

Da der Bohrerschaft des Bohrers einen verformbaren Bereich mit einem vergrösserten Aussendurchmesser aufweist, wird dieser Bereich gefedert radial in das Innengewinde eingepresst und das Aussengewinde wird elastisch verformt, so dass ein Dichtungsbereich gebildet wird. Die Elastizität des Materiales ermöglicht trotzdem die Schraubbarkeit eines derartigen Bohrers. Dank diesem Dichtungsbereich erübrigt sich ein zusätzlicher Dichtungsring. Als Folge davon können nun der Bohrer und der Bohrerführungsstutzen kürzer gebaut werden.

Der Dichtungsbereich kann an verschiedenen Orten am Bohrerschaft angeordnet sein. So kann er sich am bohrernahen oder am bohrerfernen Ende sowie zwischen ihnen befinden.

In einer bevorzugten Ausführungsform des Erfindungsgegenstandes nimmt der Aussendurchmesser stetig zu, in einer anderen stufenweise.

In einer bevorzugten Ausfuhrungsform des Erfindungsgegenstandes weist der Bohrerschaft im elastisch verformbaren Bereich eine keilförmige Ringnut auf, die die Federwirkung verstärkt. In einer anderen Ausführungsform weist der Bohrerschaft in diesem Bereich lediglich eine dünne Wandung und keinen weiteren Kern auf, so dass ebenfalls eine Federwirkung erzielt werden kann.

In der Ausführungsform gemäss Patentanspruch 1 ist der Bohrerschaft ein- oder mehrteilig gestaltet. In einer Variante ist er einstückig ausgestaltet und die Bohrkrone ist direkt in ihm gefasst. Der Bohrerschaft ist mittels des Aussengewindes des Bohrerschaftes in dem Bohrerführungsstutzen axial verschiebbar.

Eine andere Ausführungsform weist denselben Aufbau auf wie die Anbohrarmatur der Schweizer Patentanmeldung Nr. CH 3728/93. Der Bohrerschaft besteht aus einer Zustellhülse und einem darin angeordneten Bohrelement mit Bohrerschaftelement und Bohrkrone. Einerseits kann die Zustellhülse gemeinsam mit dem Bohrelement axial verschoben werden, andererseits ist das Bohrelement getrennt von der Zustellhülse verschiebbar. Der Dichtungsbereich ist nun an der Zustellhülse angeordnet.

Ebenso kann jedoch die Zustellhülse auch als separater Teil betrachtet werden, in dem ein Bohrer bestehend aus Bohrkrone und Bohrerschaft angeordnet ist. Die Dichtung des Bohrers gegenüber der Zustellhülse kann wiederum mittels des erfindungsgemassen Dichtungsbereiches erfolgen. Dies wird in Patentanspruch 2 beansprucht.

Die in Patentanspruch 1 und 2 beanspruchten Ausführungsformen können auch miteinander kombiniert werden.

In den beiliegenden Zeichnungen ist ein Ausführungsbeispiel des Erfindungsgegenstandes dargestellt, das in der nachfolgenden Beschreibung erläutert wird. Es zeigen
- Figur 1: einen Schnitt durch eine Anbohrarmatur gemass der Erfindung;
- Figur 2: eine Darstellung eines Bohrers gemäss der Erfindung von der Seite und teilweise im Schnitt dargestellt;
- Figur 3: den Bohrer gemäss Figur 2 von oben dargestellt;
- Figur 4: eine Vergrösserung des Dichtungsbereiches gemäss Figur 2;
- Figur 5: eine Darstellung einer weiteren Ausführungsform eines Bohrers gemäss der Erfindung von der Seite und teilweise im Schnitt dargestellt;
- Figur 6: eine Vergrösserung des Dichtungsbereiches gemäss Figur 5 und
- Figur 7: eine Darstellung einer dritten Ausführungsform eines Bohrers gemäss der Erfindung von der Seite und teilweise im Schnitt dargestellt.

Im folgenden werden die Begriffe oben und unten verwendet. Als oben wird der von der anzubohrenden Hauptleitung abgewandte Teil der Anbohrarmatur oder Anbohrschelle bezeichnet, als unten der der Hauptleitung zugewandte Teil. Die Begriffe beschreiben nicht die Einbaulage der Anbohrschelle. Diese Lage kann je nach Lage der Leitung, nach vorhandenem Raum und in Abhängigkeit des konzeptionellen Aufbaus unterschiedlich sein.

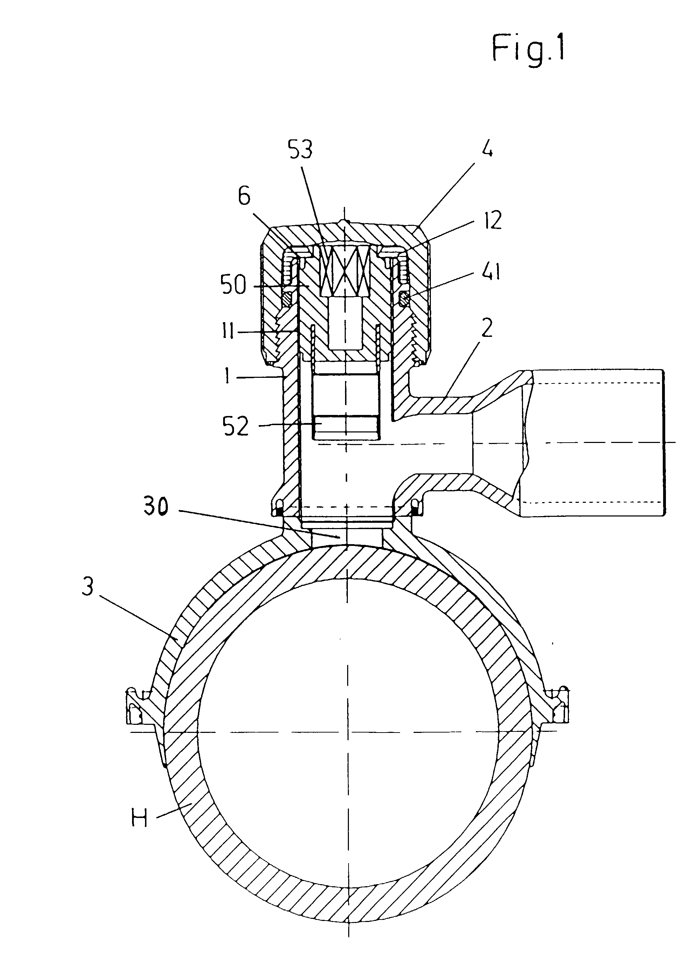

Die in Figur 1 dargestellte Anbohrarmatur weist einen Bohrerfuhrungsstutzen 1, einen Anschlussstutzen 2 und je nach Montageart eine oder zwei Halbschalen 3 auf. In diesem Beispiel ist nur eine Halbschale 3 dargestellt.
Die Halbschale 3 umfasst das Rohr H der Hauptleitung und wird mit den üblichen Mitteln am Rohr H befestigt. Die dichte Verbindung zwischen dem Rohr H und der Halbschale 3 wird ebenfalls mit bekannten Mitteln, insbesondere durch einen Widerstandsdraht für die Elektroverschweissung, hergestellt.

Die oder eine der Halbschalen 3 weist eine Durchgangsöffnung 30 auf, die eine Verbindung zwischen dem Bohrerführungsstutzen 1 und dem Rohr H der Hauptleitung bildet. Der Bohrerführungsstutzen 1 weist ein Innengewinde 11 auf, das sich bis an sein unteres Ende erstreckt.

In diesem Bohrerführungsstutzen 1 ist ein Bohrer 5 zum Anbohren der Hauptleitung H angeordnet. Dieser wird später ausführlich beschrieben. Zudem ist am oberen Ende des Bohrerführungsstutzens 1 ein Anschlagring 12 angeordnet, der ein Entfernen des Bohrers 5 verhindert. Des weiteren ist der Bohrerführungsstutzen 1 an seinem oberen Ende mittels eines Verschlussdeckels 4 verschliessbar. Zwischen dem Verschlussdeckel 4 und dem Bohrerführungsstutzen 1 ist als Dichtung ein Dichtring 41 angeordnet, der in einer in der Aussenfläche des Bohrerführungsstutzens 1 angebrachten Ringnut eingelegt ist.

In einem Winkel zum Bohrerführungsstutzen 1 ist der Anschlussstutzen 2 angeordnet. Er dient als Uebergangsstück zu einer hier nicht dargestellten Abgangsleitung. Der Anschlussstutzen 2 mündet knapp oberhalb der Halbschale 3 in den Bohrerführungsstutzen 1.

Der Bohrer 5 besteht aus einem Bohrerschaft 50 aus Kunststoff und einer Bohrkrone 52 aus Metall. Die Bohrkrone 52 kann auch aus einem Kunststoff mit metallähnlichen Eigenschaften geformt sein. Der Bohrerschaft 50 weist ein Aussengewinde 51 auf, das sich bevorzugterweise annähernd über seine gesamte Länge erstreckt. Dieses Aussengewinde 51 kämmt mit dem Innengewinde 11 des Bohrerführungsstutzens 1 und ermöglicht so die axiale Verschiebbarkeit des Bohrers 5 innerhalb des Bohrerführungsstutzens 1. Der Bohrerschaft 50 weist an seinem bohrerfernen Ende eine Oeffnung 53 auf, die als Mittel für einen Formschluss mit einem von aussen durch den Bohrerführungsstutzen 1 einführbares Werkzeug dient. Mittels dieses Werkzeuges wird der Bohrer bewegt.

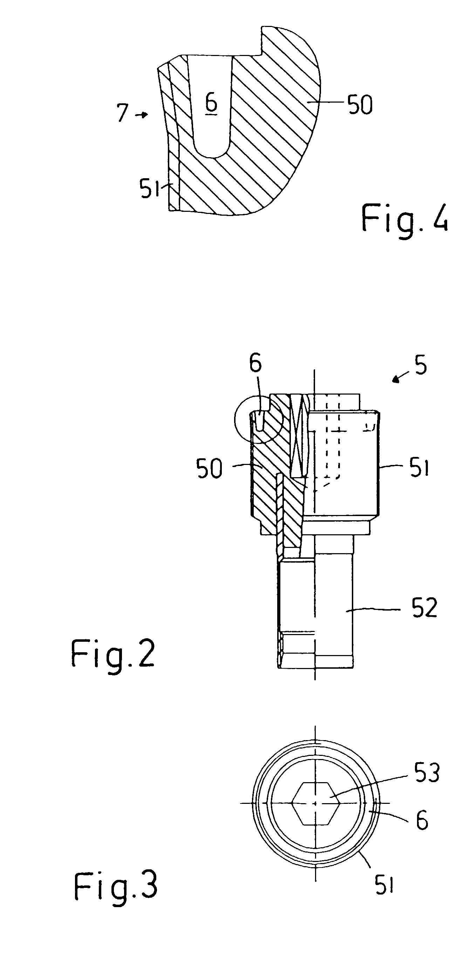

Der Aussendurchmesser des Bohrerschaftes 50 und der Innendurchmesser des Bohrerführungsstutzens 1 sind so bemessen, dass die Gewinde ineinander kämmen. Im oberen Endbereich, der ebenfalls mindestens teilweise das Aussengewinde 51 aufweist, nimmt jedoch der Aussendurchmesser des Bohrerschaftes 50 zum bohrkronenfernen Ende hin stetig zu. Dabei ist ein Teil der Aussendurchmesser des Bohrerschaftes 50 grösser als der Innendurchmesser 11 des Bohrerführungsstutzens 1. Dieser Teil bildet so einen elastisch verformbaren Dichtungsbereich 7. Der Querschnitt des Bohrerschaftes 50 ist in diesem Bereich konusförmig. Dies ist in den Figuren 2 und 4 erkennbar. Der Konus und somit der Dichtungsbereich erstreckt sich über die Höhe von mindestens drei der Steigungen des Aussengewindes 51. Er kann sich im Extremfall jedoch auch über annähernd die gesamte Länge des Bohrerschaftes erstrecken.

Der Bohrerschaft 50 weist am bohrkronenfernen Ende im Dichtungsbereich eine umlaufende Ringnut 6 auf, die auch in Figur 3 ersichtlich ist. Der Querschnitt dieser Ringnut 6 ist in diesem Beispiel keilförmig, wobei sie zum bohrkronenfernen Ende hin zunimmt. Die Tiefe der Ringnut 6 entspricht annähernd der Höhe des Dichtungsbereiches des Bohrerschaftes 50. Die Breite der Ringnut entspricht auf jeder Höhe mindestens dem Uebermass des Aussengewindes 51 bezüglich des Innengewindes 11.

Diese Ringnut 6 verstärkt die Verformbarkeit des Dichtungsbereiches des Aussengewindes 51. Dieser wird im Bohrerfuhrungsstutzen 1 radial zusammengepresst und bildet somit in jeder Lage einen Dichtungsbereich, ohne dass ein Dichtring und eine glatte Fläche vorhanden sein müssen.

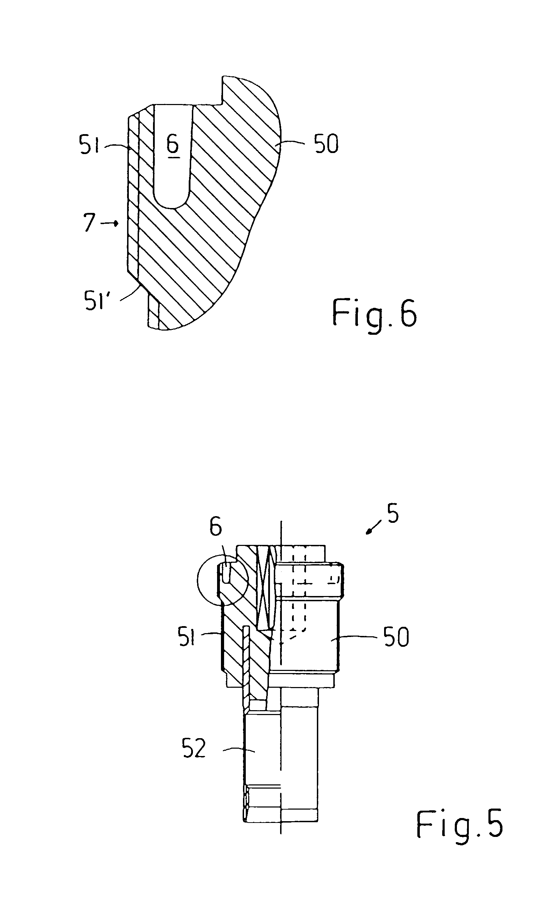

In den Figuren 5 und 6 ist eine weitere Ausfuhrungsform des Erfindungsgegenstandes dargestellt. Der Bohrer weist dieselben Merkmale auf wie oben beschrieben. Der Aussendurchmesser des Bohrerschaftes 50 nimmt jedoch zum bohrerkronenfernen Ende hin nicht stetig sondern stufenweise zu, so dass das Aussengewinde 51 mindestens, hier genau eine Stufe 51' aufweist. Diese Stufe 51' bildet bevorzugterweise eine gegenüber der Längsrichtung des Bohrers geneigte Fläche. Der Dichtungsbereich 7 wird durch den Teil des Bohrerschaftes 50 mit dem grosseren Aussendurchmesser gebildet, der wiederum leicht grosser ist als der Innendurchmesser des Bohrerführungsstutzens. Die umlaufende Ringnut 6 weist einen annähernd konstanten Querschnitt auf. Sie erstreckt sich in diesem Beispiel nur annähernd über die halbe Höhe des Dichtungsbereiches des Bohrerschaftes 50. Die Federwirkung ist bei geeigneter Wahl des Materiales trotzdem genügend gross, um eine Verschiebbarkeit des Bohrers zu gewährleisten.

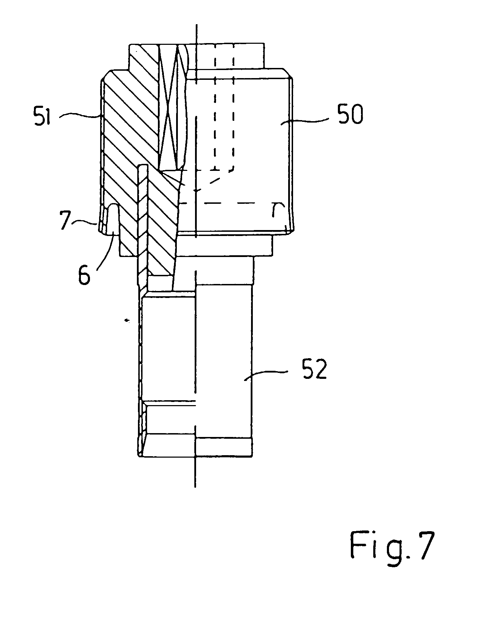

In der Figur 7 ist eine dritte Ausführungsform des erfindungsgemassen Bohrers dargestellt. Der Dichtungsbereich 7 des Bohrerschaftes 50 befindet sich an dessem bohrkronennahen Ende. Diese Anordnung hat den Vorteil, dass der Druck des im Rohr H geführten Mediums die Ringnut 6 auseinanderdrückt und der Dichtungsbereich somit in das Innengewinde des Bohrerführungsstutzens 1 gepresst wird, wodurch die Dichtung verstärkt wird.

## Patentansprüche

1. Anbohrarmatur, die mit einem Rohr (H), insbesondere durch Elektroschweissen, verbindbar ist und die einen Bohrerführungsstutzen (1) aufweist, in dem ein Bohrer (5) zum Anbohren des Rohres (H) drehbar axial verschiebbar ist, wobei der Bohrer (5) eine Bohrkrone (52) und einen ein- oder mehrteiligen Bohrerschaft (50) umfasst und wobei der Bohrerschaft (50) ein Aussengewinde (51) aufweist, das ein Innengewinde (11) des Bohrerführungsstutzens (1) kämmt,
dadurch gekennzeichnet, dass
der Bohrerschaft (50) über die Länge des Aussengewindes (51) unterschiedliche Aussendurchmesser aufweist, wobei der grosste Aussendurchmesser grösser ist als der Innendurchmesser des Bohrerführungsstutzens (1) und wobei der Bohrerschaft (50) mindestens im Bereich dieses grössten Aussendurchmessers beim Kämmen des Aussengewindes (51) mit dem Innengewinde (11) elastisch verformbar ist, so dass ein Dichtungsbereich (7) gebildet ist.

2. Anbohrarmatur, die mit einem Rohr (H), insbesondere durch Elektroschweissen, verbindbar ist und die einen Bohrerführungsstutzen (1) aufweist, in dem eine Zustellhülse und ein darin gehaltener Bohrer (5) zum Anbohren des Rohres (H) einzeln und gemeinsam drehbar axial verschiebbar sind, wobei der Bohrer (5) eine Bohrkrone (52) und einen Bohrerschaft (50) umfasst und wobei der Bohrerschaft (50) ein Aussengewinde (51) aufweist, das ein Innengewinde (11) der Zustellhülse kämmt,
dadurch gekennzeichnet, dass
der Bohrerschaft (50) über die Lange des Aussengewindes (51) unterschiedliche Aussendurchmesser aufweist, wobei der grosste Aussendurchmesser grösser ist als der Innendurchmesser der Zustellhülse und wobei der Bohrerschaft (50) mindestens im Bereich dieses grössten Aussendurchmessers beim Kämmen des Aussengewindes (51) mit dem Innengewinde (11) elastisch verformbar ist, so dass ein Dichtungsbereich (7) gebildet ist.

3. Anbohrarmatur nach einem der Ansprüche 1 oder 2, dadurch gekennzeichnet, dass der Dichtungsbereich (7) am bohrernahen Ende angeordnet ist.

4. Anbohrarmatur nach einem der Ansprüche 1 oder 2, dadurch gekennzeichnet, dass der Dichtungsbereich (7) am bohrerfernen Ende angeordnet ist.

5. Anbohrarmatur nach einem der Ansprüche 3 oder 4, dadurch gekennzeichnet, dass der Aussendurchmesser des Dichtungsbereiches (7) zum bohrernahen beziehungsweise zum bohrerfernen Ende hin stetig zunimmt.

6. Anbohrarmatur nach einem der Ansprüche 3 oder 4, dadurch gekennzeichnet, dass der Aussendurchmesser des Dichtungsbereiches (7) zum bohrernahen beziehungsweise zum bohrerfernen Ende hin stufenweise zunimmt.

7. Anbohrarmatur nach einem der Ansprüche 1 oder 2, dadurch gekennzeichnet, dass der Bohrerschaft (50) im verformbaren Bereich eine Ringnut (6) aufweist.

8. Anbohrarmatur nach Anspruch 7, dadurch gekennzeichnet, dass der Querschnitt der Ringnut (6) keilförmig ist.

9. Anbohrarmatur nach Anspruch 8, dadurch gekennzeichnet, dass die Tiefe der Ringnut (6) annähernd der Lange des Dichtungsbereiches (7) entspricht.

10. Anbohrarmatur nach einem der Ansprüche 1 oder 2, dadurch gekennzeichnet, dass der Durchmesser des Bohrerschaftes (50) im Bereich des Aussengewindes (51) über die Hohe von mindestens drei der Steigungen dieses Aussengewindes (51) grösser als der Innendurchmesser des Bohrerführungsstutzens (1) oder der Zustellhülse ist.

## Claims

1. Tapping fitting which can be connected to a pipe (H), in particular by electric welding, and which has a drill-guide socket (1) in which a drill (5) for tapping the pipe (H) is axially displaceable in a rotatable manner, the drill (5) comprising a drill bit (52) and a one-piece or multi-piece drill shank (50), and the drill shank (50) having an external thread (51) which meshes with an internal thread (11) of the drill-guide socket (1), characterized in that the drill shank (50) has different outside diameters over the length of the external thread (51), the largest outside diameter being greater than the inside diameter of the drill-guide socket (1), and the drill shank (50) being elastically deformable during the meshing of the external thread (51) with the internal thread (11) at least in the region of this largest outside diameter, so that a sealing region (7) is formed.

2. Tapping fitting which can be connected to a pipe (H), in particular by electric welding, and which has a drill-guide socket (1) in which a feed sleeve and a drill (5) held therein for tapping the pipe (H) are axially displaceable individually and together in a rotatable manner, the drill (5) comprising a drill bit (52) and a drill shank (50), and the drill shank (50) having an external thread (51) which meshes with an internal thread (11) of the feed sleeve, characterized in that the drill shank (50) has different outside diameters over the length of the external thread (51), the largest outside diameter being greater than the inside diameter of the feed sleeve, and the drill shank (50) being elastically deformable during the meshing of the external thread (51) with the internal thread (11) at least in the region of this largest outside diameter, so that a sealing region (7) is formed.

3. Tapping fitting according to either of Claims 1 and 2, characterized in that the sealing region (7) is arranged at the end close to the drill.

4. Tapping fitting according to either of Claims 1 and 2, characterized in that the sealing region (7) is arranged at the end remote from the drill.

5. Tapping fitting according to either of Claims 3 and 4, characterized in that the outside diameter of the sealing region (7) increases continuously towards the end close to the drill or the end remote from the drill.

6. Tapping fitting according to either of Claims 3 and 4, characterized in that the outside diameter of the sealing region (7) increases stepwise towards the end close to the drill or the end remote from the drill.

7. Tapping fitting according to either of Claims 1 and 2, characterized in that the drill shank (50) has an annular groove (6) in the deformable region.

8. Tapping fitting according to Claim 7, characterized in that the cross section of the annular groove (6) is wedge-shaped.

9. Tapping fitting according to Claim 8, characterized in that the depth of the annular groove (6) corresponds approximately to the length of the sealing region (7).

10. Tapping fitting according to either of Claims 1 and 2, characterized in that the diameter of the drill shank (50) in the region of the external thread (51) is greater than the inside diameter of the drill-guide socket (1) or of the feed sleeve over the height of at least three of the pitches of this external thread (51).

## Revendications

1. Accessoire de perçage, pouvant être raccordé à un tube (H), en particulier par soudage électrique, et qui présente une tubulure de guidage de foret (1), dans laquelle un foret (5) peut être déplacé axialement de manière rotative pour le perçage du tube (H), le foret (5) comprenant une couronne à diamants (52) et une tige de foret (50) en une ou plusieurs parties, et la tige de foret (50) présentant un filetage extérieur (51) qui engrène un taraudage (11) de la tubulure de guidage de foret (1), caractérisé en ce que la tige de foret (50) présente un diamètre extérieur différent sur la longueur du filetage extérieur (51), le plus grand diamètre extérieur étant plus grand que le diamètre intérieur de la tubulure de guidage de foret (1) et la tige de foret (50) étant déformable élastiquement au moins dans la zone de ce plus grand diamètre extérieur par engrènement du filetage extérieur (51) avec le taraudage (11), de sorte qu'il se forme une zone de joint étanche (7).

2. Accessoire de perçage, pouvant être raccordé à un tube (H), en particulier par soudage électrique, et qui présente une tubulure de guidage de foret (1), dans laquelle un manchon de réglage et un foret (5) maintenu dans celui-ci pour le perçage du tube (H) sont déplaçables axialement de manière rotative individuellement et conjointement, le foret (5) comprenant une couronne à diamants (52) et une tige de foret (50), la tige de foret (50) présentant un filetage extérieur (51) qui engrène un taraudage (11) du manchon de réglage, caractérisé en ce que la tige de foret (50) présente un diamètre extérieur différent sur la longueur du filetage extérieur (51), le plus grand diamètre extérieur étant plus grand que le diamètre intérieur du manchon de réglage et la tige de foret (50) étant déformable élastiquement au moins dans la zone de ce plus grand diamètre extérieur par engrènement du filetage extérieur (51) avec le taraudage (11), de sorte qu'il se forme une zone de joint étanche (7).

3. Accessoire de perçage selon l'une quelconque des revendications 1 ou 2, caractérisé en ce que la zone de joint étanche (7) est disposée à l'extrémité proche du foret.

4. Accessoire de perçage selon l'une quelconque des revendications 1 ou 2, caractérisé en ce que la zone de joint étanche (7) est disposée à l'extrémité éloignée du foret.

5. Accessoire de perçage selon l'une quelconque des revendications 3 ou 4, caractérisé en ce que le diamètre extérieur de la zone de joint étanche (7) augmente régulièrement vers l'extrémité proche du foret ou vers l'extrémité éloignée du foret.

6. Accessoire de perçage selon l'une quelconque des revendications 3 ou 4, caractérisé en ce que le diamètre extérieur de la zone de joint étanche (7) augmente par échelons vers l'extrémité proche du foret ou vers l'extrémité éloignée du foret.

7. Accessoire de perçage selon l'une quelconque des revendications 1 ou 2, caractérisé en ce que la tige de foret (50) présente une rainure annulaire (6) dans la zone déformable.

8. Accessoire de perçage selon la revendication 7, caractérisé en ce que la section transversale de la rainure annulaire (6) est en forme de clavette.

9. Accessoire de perçage selon la revendication 8, caractérisé en ce que la profondeur de la rainure annulaire (6) correspond approximativement à la longueur de la zone de joint étanche (7).

10. Accessoire de perçage selon l'une quelconque des revendications 1 ou 2, caractérisé en ce que le diamètre de la tige de foret (50) dans la zone du filetage extérieur (51), sur la hauteur d'au moins trois pas de ce filetage extérieur (51), est plus grand que le diamètre intérieur de la tubulure de guidage de foret (1) ou du manchon de réglage.
